# EUROPEAN PATENT APPLICATION

(11) **EP 3 131 057 A1**
(43) Date of publication of application: **15.02.2017**
(21) Application number: 15769209.6
(22) Date of filing: 25.03.2015
(51) Int. Cl.: G06Q 50/30

(54) **METHOD AND SYSTEM FOR PROVIDING SUPPORT REGARDING OFFLINE ACTIVITY TO USERS IN ONLINE SOCIAL NETWORK TO PROMOTE BOTH ONLINE SOCIAL ACTIVITY AND OFFLINE ACTIVITY, AND COMPUTER-READABLE RECORDING MEDIUM**

(30) Priority: 25.03.2014 KR 20140034864
(71) Applicant: Starindex Incorporated, Seoul 121-893 (KR)
(72) Inventor: KIM, Wook, Seoul 121-893 (KR)
(74) Representative: Zardi, Marco
(86) International application number: PCT/KR2015/002922
(87) International publication number: WO 2015/147545

(57) **Abstract**

The present invention relates to a method and system for providing support regarding offline activity to users in online social network to promote both online social activity and offline activity, and a computer-readable recording medium. According to one aspect of the present invention, provided is a computer-implemented method for an online social network comprising the steps of: receiving a request for a registration of a predetermined offline activity from a first user terminal device; registering information related to the offline activity according to the request for registration; receiving a check-in request of a second user regarding the registered information related to the offline activity; allowing the second user to check in regards to the registered information related to the offline activity; and showing the result of the check-in to multiple other users.

## Description

### FIELD OF THE INVENTION

The present invention relates to a method, system, and computer-readable recording medium for providing support for offline activities to users in an online social network to promote both online social activities and offline activities.

### BACKGROUND

Recently, a variety of online social networks (i.e., social interaction networks on the Internet) are prosperous with Facebook taking the lead. Users are increasingly getting used to exposing themselves in online social networks and sharing their personal information with other users. Examples of the personal information may include photographs of the users, places visited by the users, events attended by the users, shops used by the users, intimate friends of the same/opposite sex of the users, and the like.

However, notwithstanding the above tendencies of the users, the prior art has actually failed to fully lead online social activities of the users to offline activities, which serve as a driver of the economy on a larger scale.

In this regard, the inventor intends to overcome the above shortcomings in the prior art by means of the present invention.

### SUMMARY OF THE INVENTION

One object of the present invention is to solve all the above-described problems in the prior art.

Another object of the invention is to provide support for offline activities to users in an online social network.

Yet another object of the invention is to promote both online social activities and offline activities of users.

Still another object of the invention is to allow online social activities and offline activities of users to promote each other synergistically

According to one aspect of the invention to achieve the objects as described above, there is provided a computer-implemented method for an online social network, comprising the steps of: receiving a request for registration of a predetermined offline activity from a terminal device of a first user; registering information on the offline activity according to the request for registration; receiving a check-in request of a second user with respect to the registered information on the offline activity; allowing the second user to check-in with respect to the registered information on the offline activity; and exposing a result of the check-in to a plurality of other users.

In addition, there are further provided other methods and systems to implement the invention, as well as computer-readable recording media having stored thereon computer programs for executing the methods.

According to the invention, support for offline activities is provided to users in an online social network.

According to the invention, both online social activities and offline activities of users are promoted.

According to the invention, online social activities and offline activities of users promote each other synergistically.

### BRIEF DESCRIPTION OF THE DRAWINGS

FIG. 1 schematically shows the configuration of an entire system for providing support for offline activities to users in an online social network to promote both online social activities and offline activities according to one embodiment of the invention.
FIG. 2 specifically shows the internal configuration of a support system 200 according to one embodiment of the invention.
FIG. 3 illustratively shows an offline activity support process according to one embodiment of the invention.
FIG. 4 illustratively shows a user management process according to one embodiment of the invention.
FIGs. 5a to 5c show examples of interfaces for a registered user.
FIG. 6 shows an example of user experience related to provision of registered information on offline activities.
FIG. 7 shows an example of user experience related to a check-in request.
FIGs. 8a to 8c show examples of user experience related to provision of cyber-points.
FIGs. 9a to 9e and 10a to 10c show examples of user experience related to online social activities.

### DETAILED DESCRIPTION OF THE PREFERRED EMBODIMENTS

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures and characteristics described herein may be implemented as modified from one embodiment to another without departing from the spirit and scope of the invention. Furthermore, it shall be understood that the locations or arrangements of individual elements within each of the embodiments may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

Hereinafter, various preferred embodiments of the present invention will be described in detail with reference to the accompanying drawings to enable those skilled in the art to easily implement the invention.

Herein, the term "content" or "contents" denotes digital information or individual information elements comprised of text, symbol, speech, sound, image, video, or the like, which are accessible via communication networks. For example, such contents may comprise data such as text, image, video, audio, and links (e.g., web links) or a combination of at least two types of such data.

### Configuration of an entire system

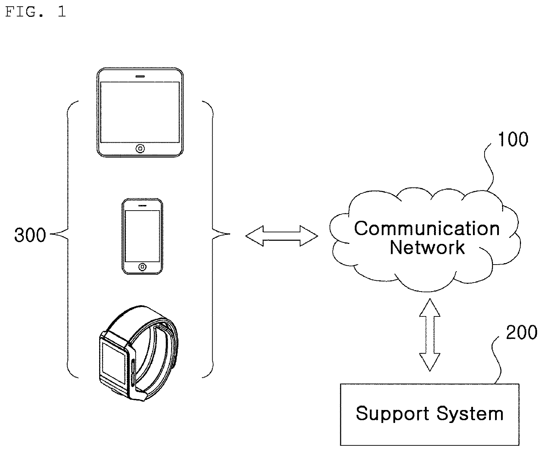

FIG. 1 schematically shows the configuration of an entire system for providing support for offline activities to users in an online social network to promote both online social activities and offline activities according to one embodiment of the invention.

As shown in FIG. 1, the entire system according to one embodiment of the invention may comprise a communication network 100, a support system 200, and a user terminal device 300.

First, the communication network 100 according to one embodiment of the invention may be implemented regardless of communication modality such as wired and wireless communications, and may be constructed from a variety of communication networks such as local area networks (LANs), metropolitan area networks (MANs), and wide area networks (WANs). Preferably, the communication network 100 described herein may be the Internet or the World Wide Web (WWW). However, the communication network 100 is not necessarily limited thereto, and may at least partially include known wired/wireless data communication networks, known telephone networks, or known wired/wireless television communication networks.

Next, the support system 200 according to one embodiment of the invention may provide support for offline activities to users in an online social network to promote both online social activities and offline activities. The support system 200 may at least partially include or interwork with a system for hosting an online social network for implementing the invention. Thus, according to the invention, online social activities such as friending, following, exchanging messages, chatting, sending/receiving feeds, and sending/receiving contents may be carried out between users who have joined the online social network, and account information or related information of each of the joined users may be stored and managed as necessary.

The configuration and function of the support system 200 according to the invention will be discussed in more detail below.

Lastly, the user terminal device 300 according to one embodiment of the invention is digital equipment that may function to connect to and then communicate with the support system 200 or another user terminal device 300, and any type of digital equipment having memory means and a microprocessor for computing capabilities, such as a desktop computer, notebook computer, workstation, personal digital assistant (PDA), web pad, mobile phone, and smart device (e.g., a smart phone, smart pad, smart wearable equipment, etc.) may be adopted as the user terminal device 300 according to the invention.

Particularly, the user terminal device 300 may include a browser program or application program for providing contents to users. For example, the browser program may be a web browser for receiving online social network contents via the support system 200 and providing them to users for browsing thereof. Meanwhile, the application program may be an application that may be downloaded from the support system 200 for execution. For example, the application program may be an application for receiving online social network contents via the support system 200 and providing them to users so that the users may carry out their online social activities with respect to the received contents. The properties of the application program may be similar to those of at least one of applications dedicated to various known online social networks.

### Configuration of the support system

Hereinafter, the internal configuration of the support system 200 according to the invention and the functions of the respective components thereof will be discussed.

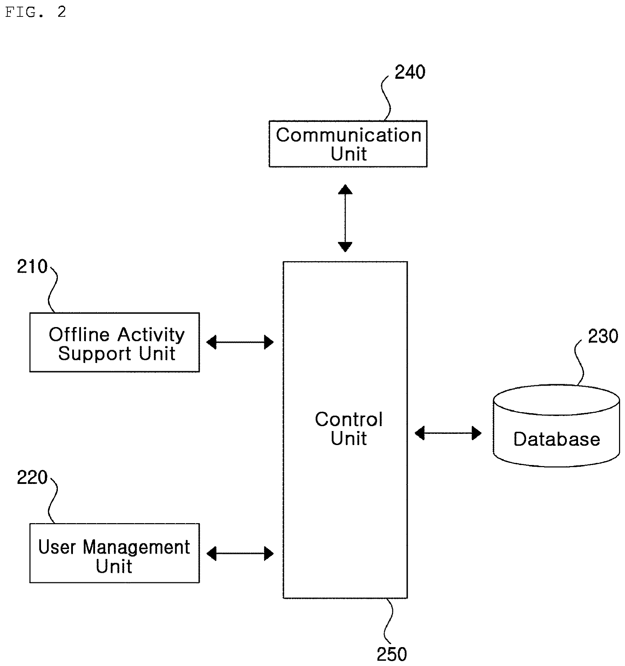

FIG. 2 specifically shows the internal configuration of the support system 200 according to one embodiment of the invention.

The support system 200 according to one embodiment of the invention may be digital equipment having memory means and a microprocessor for computing capabilities. The support system 200 may be a server system. As shown in FIG. 2, the support system 200 may comprise an offline activity support unit 210, a user management unit 220, a database 230, a communication unit 240, and a control unit 250. According to one embodiment of the invention, at least some of the offline activity support unit 210, the user management unit 220, the database 230, the communication unit 240, and the control unit 250 may be program modules to communicate with the user terminal device 300. The program modules may be included in the support system 200 in the form of operating systems, application program modules or other program modules, while they may be physically stored on a variety of commonly known storage devices. Further, the program modules may also be stored in a remote storage device that may communicate with the support system 200. Meanwhile, such program modules may include, but not limited to, routines, subroutines, programs, objects, components, data structures and the like for performing specific tasks or executing specific abstract data types as will be described below in accordance with the invention.

First, the offline activity support unit 210 according to one embodiment of the invention may function to register information on a place to visit, information on an event, information on a shop, or the like for offline activities of other users according to a request of a specific user, and to support check-in of at least some of the users who desire to visit the place, attend the event, use the shop, or the like, with respect to the registered information on offline activities. Further, the offline activity support unit 210 may function to expose, with respect to the registered information on offline activities, information on a user who has checked-in with respect to the registered information on a specific offline activity, in order to facilitate offline activities of users and also facilitate online social activities based on interest in the checked-in user whose information has been exposed. To this end, the offline activity support unit 210 may support online social networking between the checked-in user and the other users.

The configuration and function of the offline activity support unit 210 will be discussed in detail below.

Next, the user management unit 220 according to one embodiment of the invention may function to provide quantifiable benefits to a user who has checked-in with respect to the registered information on a specific offline activity, or to provide cyber-points to other users so that they may purchase or acquire the points to consume or use later. That is, the checked-in user whose information has been exposed may be provided with benefits in return for causing the other users to have more interest in the registered information on the corresponding offline activity, and the other users (those who have not checked-in in many cases) may consume their cyber-points to carry out online social activities with the checked-in user in whom they have interest, without having to carry out the corresponding offline activity.

The configuration and function of the user management unit 220 will be discussed in detail below.

Next, the database 230 according to one embodiment of the invention may store the registered information on offline activities, the information on user check-in with respect to the registered information on offline activities, the information on benefits or cyber-points provided to users, and the like. Although FIG. 2 shows that the database 230 is incorporated in the support system 200, the database 230 may be configured separately from the support system 200 as needed by those skilled in the art to implement the invention. Meanwhile, the database 230 according to the invention encompasses a computer-readable recording medium, and may refer not only to a database in a narrow sense but also to a database in a broad sense including file system-based data records and the like. The database 230 according to the invention may be even a collection of simple logs if one can search and retrieve data from the collection.

Next, the communication unit 240 according to one embodiment of the invention may function to enable data transmission/receipt to/from the offline activity support unit 210, the user management unit 220, and the database 230.

Lastly, the control unit 250 according to one embodiment of the invention may function to control data flow among the offline activity support unit 210, the user management unit 220, the database 230, and the communication unit 240. That is, the control unit 250 according to the invention may control data flow into/out of the support system 200 or data flow among the respective components of the support system 200, such that the offline activity support unit 210, the user management unit 220, the database 230, and the communication unit 240 may carry out their particular functions, respectively.

### Offline activity support (registration, check-in, etc.)

Hereinafter, registration, check-in, and the like in the offline activity support according to one embodiment of the invention will be discussed in detail with reference to the drawings.

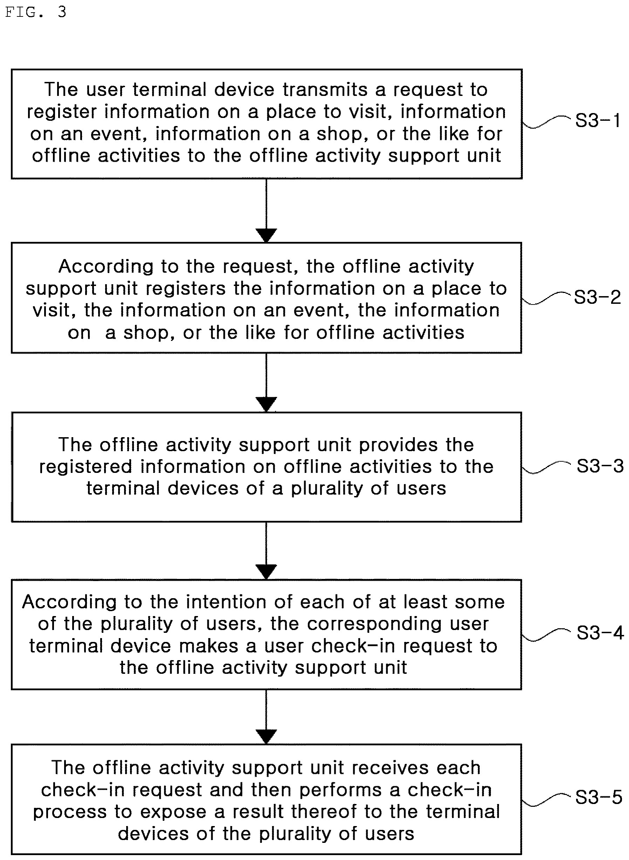

FIG. 3 illustratively shows an offline activity support process according to one embodiment of the invention.

In step S3-1, the user terminal device 300 may transmit, according to a request of a corresponding user, a request to register information on a place to visit, information on an event, information on a shop, or the like for offline activities to the support system 200, preferably to the offline activity support unit 210. Here, the user who makes such a request may be a business operator who desires to induce offline activities of other general users (e.g., visitors, event attendees, shoppers, etc.) and specifically, may be a visit facilitator, an event host, a shopkeeper, or the like. For convenience, such a user will be referred to as a registered user hereinafter. According to one embodiment of the invention, registration fees may be charged to a registered user (who seeks profits).

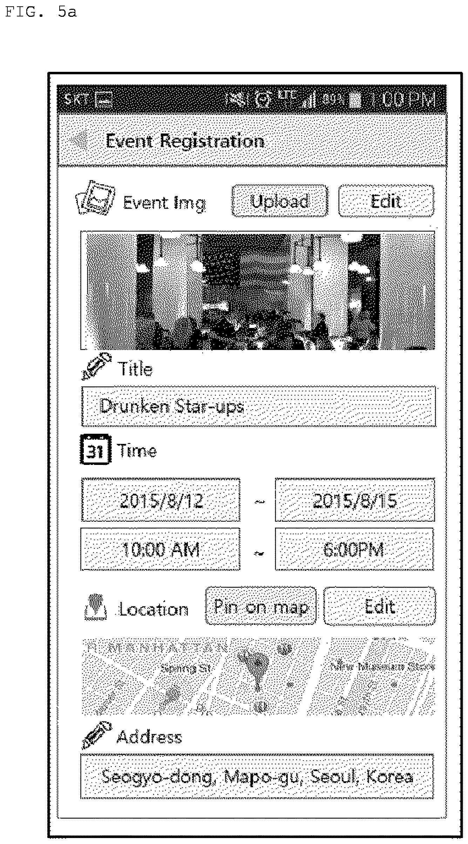

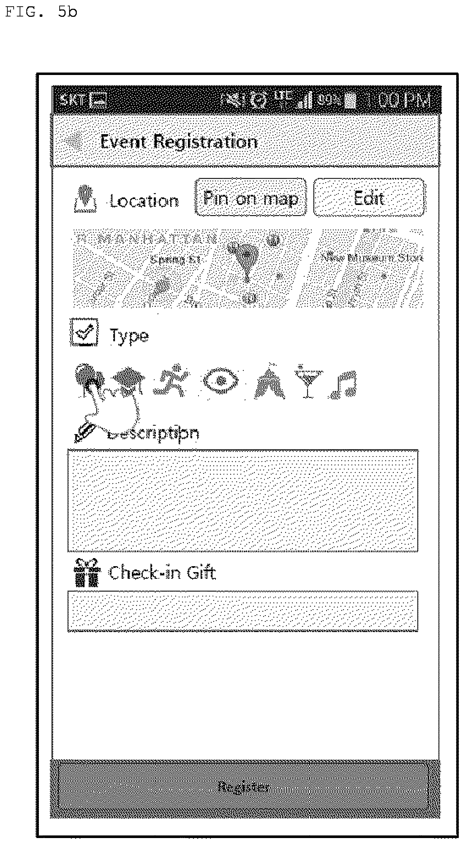

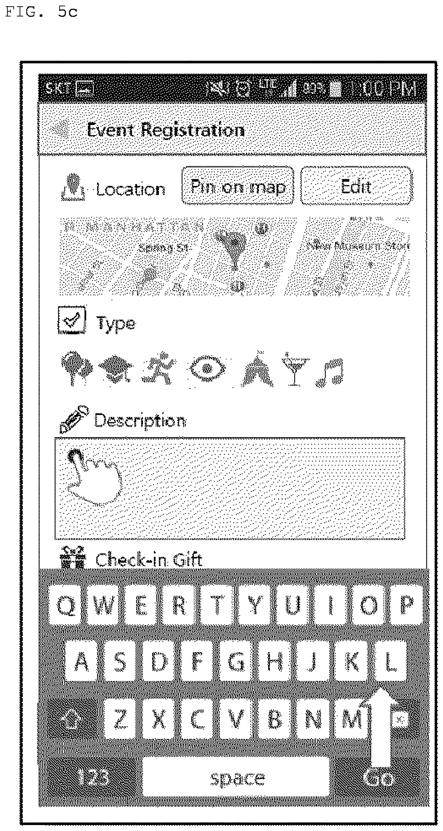

Since the above request is intended to induce offline activities, it may be required to include information on locational bases of offline activities. In order to support such a request, the terminal device 300 of a registered user may provide the registered user with a maplike graphical interface or other interfaces for specifying the locational bases. FIGs. 5a to 5c show examples of user interfaces for the request as above and those to be described below.

Meanwhile, as shown, the request may further include information on descriptions of offline activities (e.g., a description of an offline activity on a visit, a description of an event, a description of a shop, etc.) Further, the request may further include information on benefits that may be specially provided to checked-in users.

Naturally, at least a part of the above information included in the request may also be included in the registered information to be described below.

In step S3-2, according to the above request, the offline activity support unit 210 may register the information on a place to visit, the information on an event, the information on a shop, or the like for offline activities. The registered information may be recorded in the database 230 or the like.

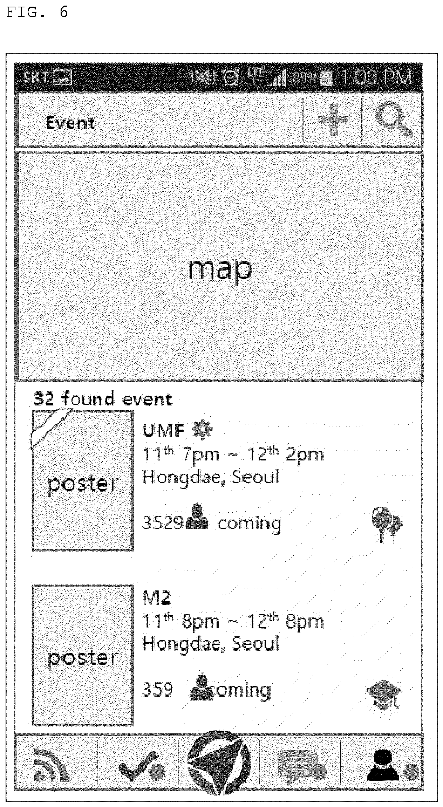

In step S3-3, the offline activity support unit 210 may provide the registered information on offline activities to the terminal devices 300 of a plurality of users. The users provided with the registered information on offline activities may be users who have joined an online social network hosted by or interworking with the support system 200. The provision of the above information may be carried out by means of feeds or push messages, and may also be carried out according to actions of the users of the terminal devices 300, such as searching or querying the database 230. The registered information on offline activities provided as above may be identified in the terminal devices 300 by the corresponding users. FIG. 6 shows an example of user experience related to the provision of the registered information on offline activities. (A map may indicate a location of a currently ongoing event by means of a pin, although none is shown in FIG. 6.)

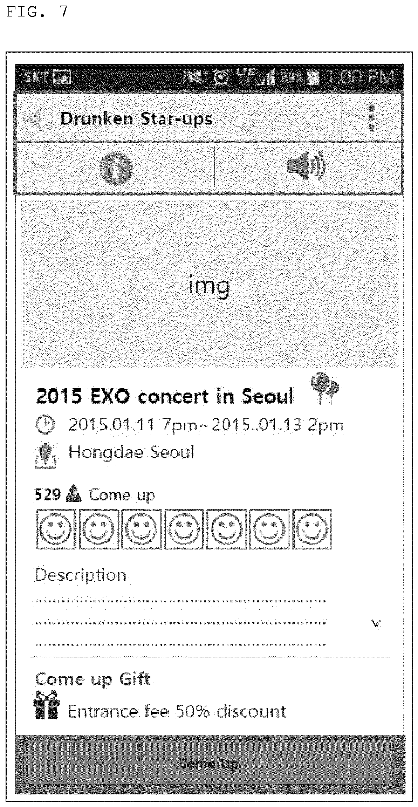

In step S3-4, according to the intention of each of at least some of the plurality of users, the corresponding user terminal device 300 may make a user check-in request to the offline activity support unit 210. Here, the check-in request may preferably include a facial photograph image of the corresponding user. Meanwhile, the check-in request may less preferably include biographical information of the corresponding user (e.g., at least some of a name, sex, age, school name, club name, company name, and the like). The biographical information may be a type of information helpful to the user's social interaction. Meanwhile, in some cases, the check-in request may also include identification information of the corresponding user (e.g., personal identification information (e.g., a nickname, e-mail account, user ID, etc.) used in the online social network). FIG. 7 shows an example of user experience related to the check-in request (i.e., come-up acceptance).

In step S3-5, the offline activity support unit 210 may receive each check-in request and then perform a check-in process to expose a result thereof to the terminal devices 300 of the plurality of users. The result of check-in may be facial photograph images of the checked-in users exposed with respect to the registered information on offline activities *(see* face representations in FIG. 7). Further, the check-in result may also be biographical information of the checked-in users exposed with respect to the registered information on offline activities. The biographical information may be exposed via statistical processing. That is, without exposing the biographical information of each user, the number of checked-in users of either sex or that of checked-in users of a specific school name may be exposed instead.

Meanwhile, the check-in result may include the identification information as described above, which enables online social activities to be carried out with respect to each of the checked-in users. (Preferably, the identification information may not be directly exposed to other users in the online social network.) Thus, the checked-in users may experience online social activities from other users who have interest in them.

The above exposure may be carried out only to the users who show interest in the registered information on offline activities (i.e., those who touch or click on an object on a user interface of the registered information on offline activities, or receive or search for feeds on the registered information on offline activities).

Further, the exposure may be updated whenever the overall status of check-in with respect to the registered information on offline activities is changed. That is, a feed on the registered information on offline activities or a search result thereof may be provided per each user's check-in, reflecting the new check-in result.

The offline activity support as described above may result in the following situation. For example, if the registered information on offline activities is related to a university party, a facial photograph image of a student who has checked-in to attend the party may be exposed together with the registered information. This may obviously cause other students who are intimate with or have interest in the checked-in student to actively attend the party. Some of these students may also carry out face check-in, which may make a great success of the party like an avalanche in many cases. That is, offline activities may consequently be increased significantly.

### Offline activity support (additional functions for checked-in users)

Hereinafter, additional functions for checked-in users in the offline activity support according to one embodiment of the invention will be discussed.

The offline activity support unit 210 may provide at least one of the following additional functions to checked-in users, as necessary:
(i) inviting friends or followers of the checked-in users to an offline activity;
(ii) providing a timeline dedicated to an offline activity; and
(iii) providing information after completion of an offline activity.

First, the function (i) will be discussed. The offline activity support unit 210 may support a checked-in user such that before or after his/her check-in, the user may send another user who is already a friend or follower of the user in an online social network a notification of invitation to the registered information on an offline activity corresponding to the check-in. That is, according to a request of the checked-in user, the offline activity support unit 210 may transmit the notification of invitation to the registered information on the offline activity to the terminal device 300 of the another user. In this case, the checked-in user may compose a message to be added to the notification of invitation using his/her terminal device 300, and may further send the message via the offline activity support unit 210.

Next, the function (ii) will be discussed. The offline activity support unit 210 may allow the terminal device 300 of a checked-in user to be provided with a timeline of the registered information on a corresponding offline activity after check-in. The timeline may be similar to those provided in Facebook^{®}, which is a well-known social network service. The provided timeline may allow the checked-in user to experience contents on the registered information on the offline activity, which are generated by other checked-in users. Particularly, the timeline may be provided only to checked-in users.

Lastly, the function (iii) will be discussed. Even when it is determined that an offline activity has been completed according to the registered information on the offline activity, the offline activity support unit 210 may allow checked-in users to exclusively leave feeds or messages and interact with each other with respect to the registered information on the offline activity.

### User management

As discussed above, the offline activity support according to the invention may employ face check-in or the like to achieve the effects of inducing more and more users to have interest in offline activities (or checked-in users who carry out the offline activities) and to carry out the offline activities. However, in order to bring about even more offline activities and online social activities, the following will be required:
(i) definite motivation for users to check-in with respect to the registered information on offline activities; and
(ii) growth in online interaction between checked-in users and other users.

To this end, in one embodiment of the invention, quantifiable benefits may be provided to checked-in users, while cyber-points may be provided to other users so that they may purchase or acquire the points to consume or use later. Here, the benefits may preferably be provided through contribution of a business operator who desires to induce offline activities of users, and the cyber-points may be consumed by the other users to obtain functions required for interaction with the checked-in users. Hereinafter, user management according to one embodiment of the invention will be discussed in detail with reference to the drawings.

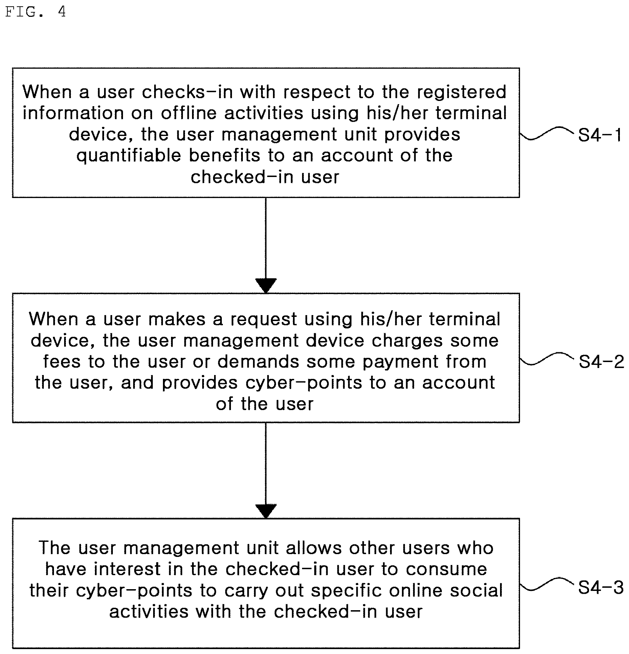

FIG. 4 illustratively shows a user management process according to one embodiment of the invention.

In step S4-1, when a user checks-in with respect to the registered information on offline activities using his/her terminal device 300, the user management unit 220 may provide quantifiable benefits to an account of the checked-in user. Here, the provided benefits may not only be cyber-properties having monetary values available in an online social network, but also be redeemable certificates of offline benefits that may be provided at visited places, event places, shops or the like corresponding to the registered information on offline activities. The redeemable certificates may be electronically generated and stored in the database 230 or the like with respect to the checked-in user. Further, the redeemable certificates may be provided to the terminal device 300 of the checked-in user.

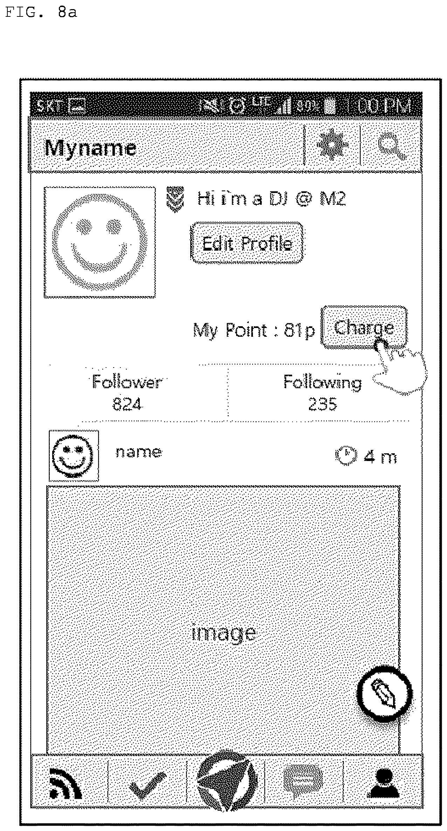

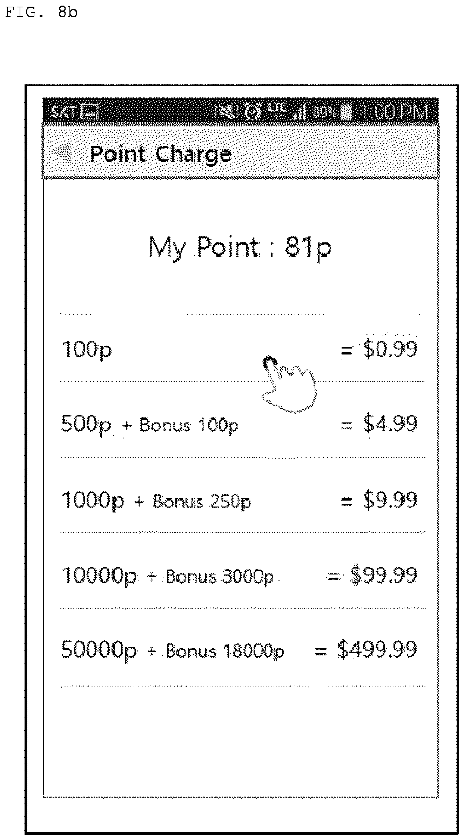

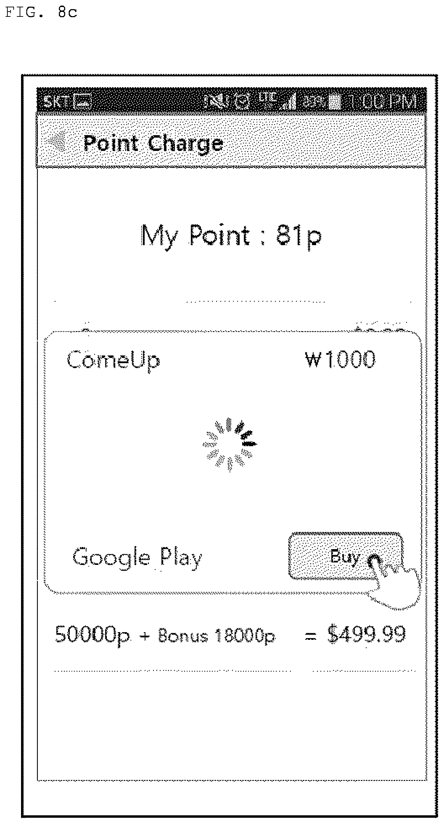

In step S4-2, when a user makes a request using his/her terminal device 300, the user management device 220 may charge some fees to the user or demand some payment from the user (e.g., demand that the user consume some points accumulated at a company affiliated with an operator of the support system 200) and provide cyber-points to an account of the user. Here, the provided cyber-points may be cyber-properties having monetary values available in an online social network. FIGs. 8a to 8c show examples of user experience related to the provision of cyber-points.

In step S4-3, the user management unit 220 may allow other users who have interest in the checked-in user to consume their cyber-points to carry out specific online social activities with the checked-in user. Here, the online social activities allowed in return for the consumption of cyber-points may be making a friend request, making a follower request, sending a message, sending a chat invitation, reading (a part of) a post of the checked-in user, viewing (a part of) personal information of the checked-in user, and the like in an online social network. In this case, the other users may favorably carry out online social activities with the checked-in user through offline activities or the like in which they may have mutual interest.

Meanwhile, when the checked-in user carries out online social activities in response to the above actions of the other users, the checked-in user may acquire cyber-points corresponding to at least a part of the consumed cyber-points of the other users, through intervention of the user management unit 220. The acquired cyber-points may be reflected in the account of the checked-in user.

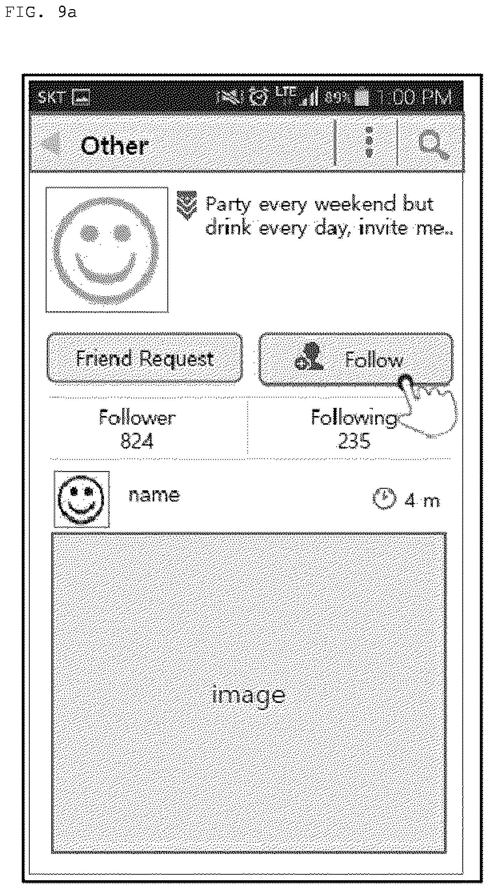

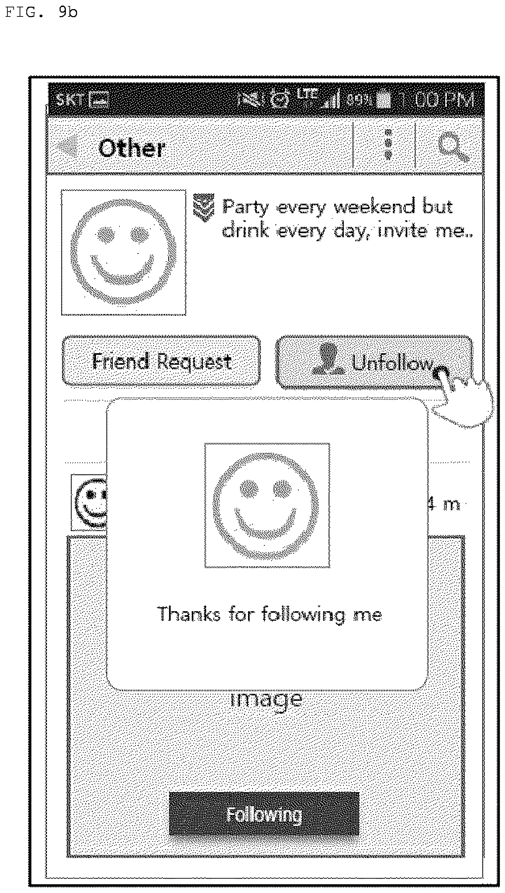

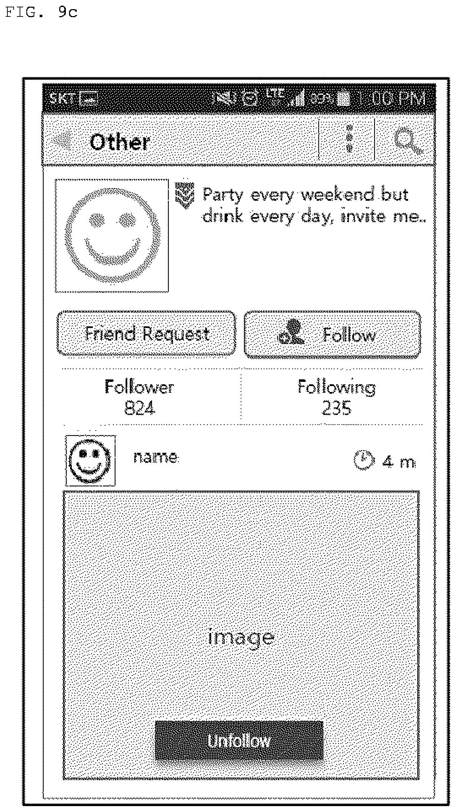

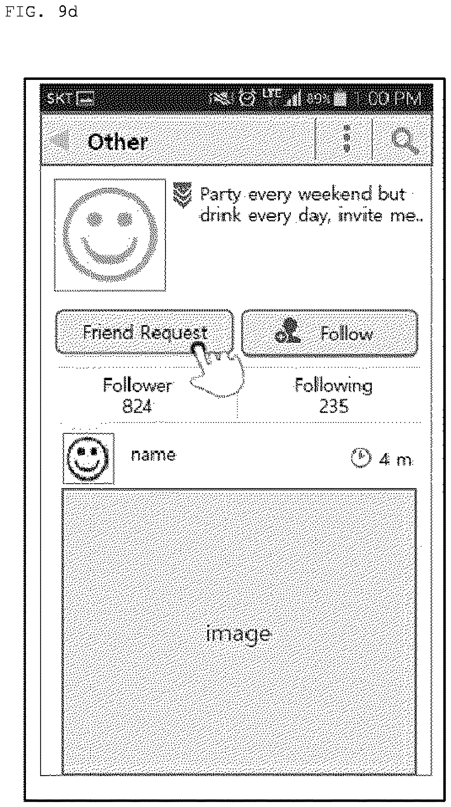

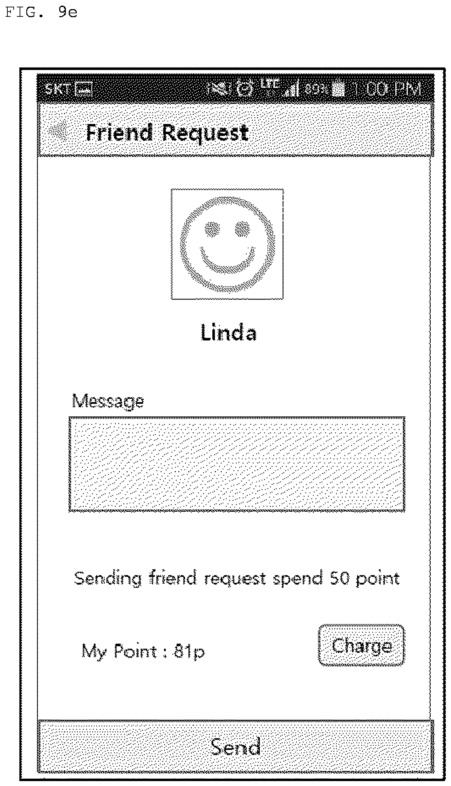

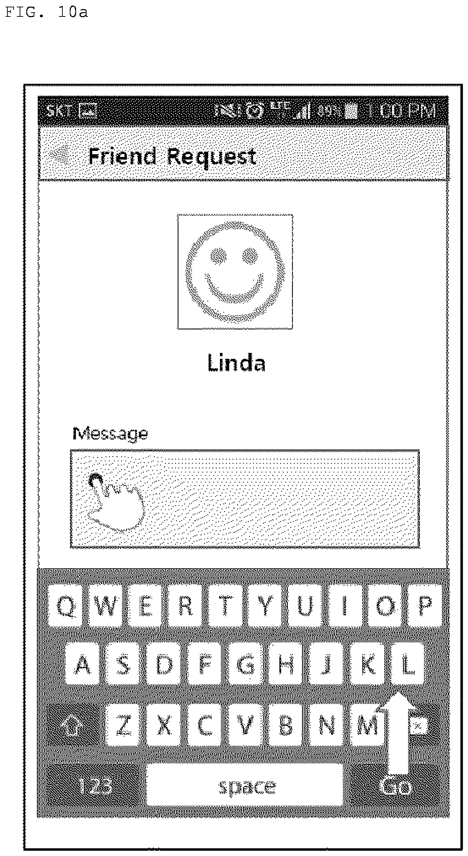

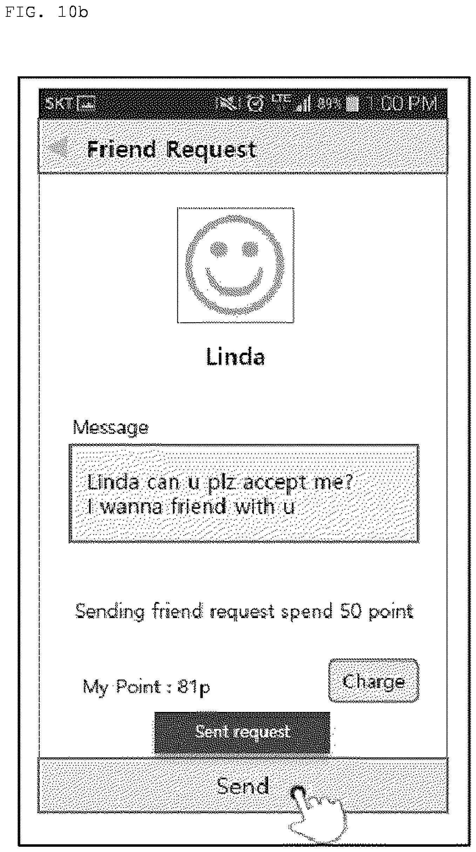

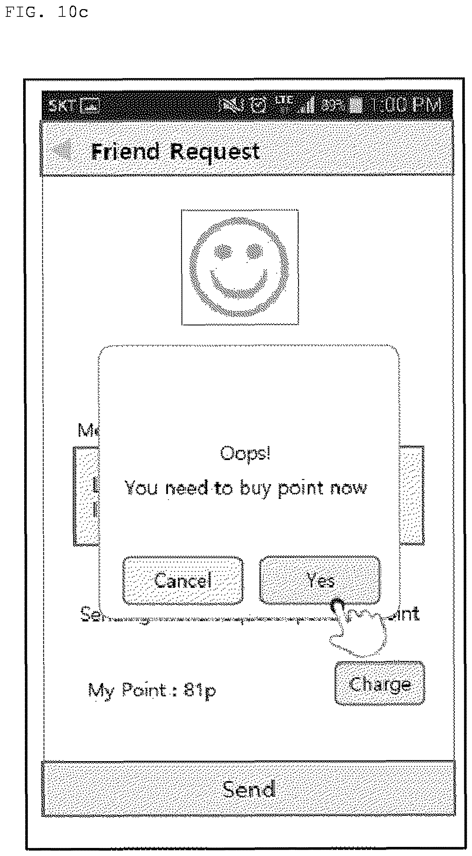

The above online social activities may be carried out before, during, or after the corresponding offline activities. However, the online social activities may be allowed only before the offline activities, in order to fully facilitate the offline activities. FIGs. 9a to 9e and 10a to 10c show examples of user experience related to the online social activities.

However, even when the other users use their cyber-points, the above online social activities may be appropriately blocked for the checked-in user who has shown intention of refusal, in order to prevent inconvenience of the checked-in user. (In this case, the cyber-points may not be consumed or may be refunded.) Further, the above online social activities may be carried out with respect to the checked-in user only not more than a specific number of times for predetermined periods of time or at predetermined intervals.

The embodiments according to the invention as described above may be implemented in the form of program instructions that can be executed by various computer components, and may be stored on a computer-readable recording medium. The computer-readable recording medium may include program instructions, data files, data structures and the like, separately or in combination. The program instructions stored on the computer-readable recording medium may be specially designed and configured for the present invention, or may also be known and available to those skilled in the computer software field. Examples of the computer-readable recording medium include the following: magnetic media such as hard disks, floppy disks and magnetic tapes; optical media such as compact disk-read only memory (CD-ROM) and digital versatile disks (DVDs); magneto-optical media such as floptical disks; and hardware devices such as read-only memory (ROM), random access memory (RAM) and flash memory, which are specially configured to store and execute program instructions. Examples of the program instructions include not only machine language codes created by a compiler or the like, but also high-level language codes that can be executed by a computer using an interpreter or the like. The above hardware devices may be changed to one or more software modules to perform the processes of the present invention, and vice versa.

Although the present invention has been described in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

## Claims

1. A computer-implemented method for an online social network, comprising the steps of:
receiving a request for registration of a predetermined offline activity from a terminal device of a first user;
registering information on the offline activity according to the request for registration;
receiving a check-in request of a second user with respect to the registered information on the offline activity;
allowing the second user to check-in with respect to the registered information on the offline activity; and
exposing a result of the check-in to a plurality of other users.

2. The method of Claim 1, wherein the registered information on the offline activity includes information on a locational base for the offline activity.

3. The method of Claim 2, wherein the registered information on the offline activity further includes information on a description of the offline activity and information on check-in benefits.

4. The method of Claim 1, wherein the check-in request of the second user includes a facial photograph image of the second user.

5. The method of Claim 1, wherein the check-in request of the second user includes biographical information of the second user.

6. The method of Claim 1, wherein the check-in request of the second user includes identification information of the second user.

7. The method of Claim 1, wherein the check-in result includes information for carrying out an online social activity with the second user.

8. The method of Claim 1, further comprising the step of providing benefits to an account of the second user.

9. The method of Claim 8, wherein the benefits are redeemable certificates.

10. The method of Claim 8, wherein the benefits are cyber-properties.

11. The method of Claim 1, further comprising the step of consuming cyber-points of an account of a third user who intends to carry out an online social activity with the second user.

12. The method of Claim 11, further comprising the step of providing cyber-points corresponding to at least a part of the consumed cyber-points to an account of the second user.

13. An offline activity support system, comprising:
an offline activity support unit for receiving a request for registration of a predetermined offline activity from a terminal device of a first user, registering information on the offline activity according to the request for registration, receiving a check-in request of a second user with respect to the registered information on the offline activity, allowing the second user to check-in with respect to the registered information on the offline activity, and exposing a result of the check-in to a plurality of other users; and
a database for storing the registered information on the offline activity.

14. The system of Claim 13, wherein the registered information on the offline activity includes information on a locational base for the offline activity.

15. The system of Claim 14, wherein the registered information on the offline activity further includes information on a description of the offline activity and information on check-in benefits.

16. The system of Claim 13, wherein the check-in request of the second user includes a facial photograph image of the second user.

17. The system of Claim 13, wherein the check-in request of the second user includes biographical information of the second user.

18. The system of Claim 13, wherein the check-in request of the second user includes identification information of the second user.

19. The system of Claim 13, wherein the check-in result includes information for carrying out an online social activity with the second user.

20. The system of Claim 13, further comprising a user management unit for providing benefits to an account of the second user.

21. The system of Claim 20, wherein the benefits are redeemable certificates.

22. The system of Claim 20, wherein the benefits are cyber-properties.

23. The system of Claim 20, wherein the user management unit consumes cyber-points of an account of a third user who intends to carry out an online social activity with the second user.

24. The system of Claim 23, wherein the user management unit provides cyber-points corresponding to at least a part of the consumed cyber-points to an account of the second user.

25. A computer-readable recording medium having stored thereon a computer program for executing the method of Claim 1.
